# EUROPEAN PATENT APPLICATION

(11) **EP 4 786 538 A1**
(43) Date of publication of application: **05.08.2026**
(21) Application number: 25155233.7
(22) Date of filing: 31.01.2025
(51) Int. Cl.: C08K 3/22, C08K 3/36, C08K 9/06, C08K 5/13, C08K 5/526, B29C 64/153, B33Y 70/00, B33Y 70/10

(54) **POLYAMIDE POWDER FOR LASER POWDER BED FUSION AND A METHOD FOR PRODUCING THE SAME**

(71) Applicant: SOCAR Turkey Research & Development and Innovation Co., 35800 Aliaga-Izmir (TR)
(72) Inventor: Coskun, Mustafa Cüneyt, 35800 Aliaga-Izmir (TR); Yurtseven, Merve, 35800 Aliaga-Izmir (TR); Ezdesir, Ayhan, 35800 Aliaga-Izmir (TR); Alparslan, Alp, 35800 Aliaga-Izmir (TR)
(74) Representative: Müller-Boré & Partner Patentanwälte PartG mbB

(57) **Abstract**

The present invention provides a polyamide powder for laser powder bed fusion (PBF-LB) comprising a polyamide, and 0.5 to 10 wt% based on the polyamide, of an additive composition, wherein the additive composition comprises silica, a metal oxide, a primary antioxidant, and a secondary antioxidant.

## Description

The present invention provides a polyamide powder for laser powder bed fusion and a method for producing the same.

Powder bed fusion using a laser beam (PBF-LB) is an additive manufacturing process wherein shaped bodies are manufactured by selective laser melting. First, a powder material from a feedstock is evenly applied to the build plate with a coater in a thin layer of 10 to 200 µm. Subsequently, the material is selectively melted with a directed laser beam. The build platform is then lowered, and the process starts again. In this way, individual melt tracks are created next to each other, forming a layer together. Several layers on top of each other form the shaped body.

The extremely thin layer thickness enables a high detail resolution of the shaped bodies. The PBF-LB process thus contributes to an expansion of the possible shaped body portfolio beyond the limits of conventional production. It extends the possibilities of geometry that can be realized.

Polyamides are one of the most frequently employed polymers for PBF-LB. Typically, the polyamide powder used as the feedstock in PBF-LB is produced by the dissolution-precipitation technique due to its high production efficiency.

However, unlike alternative methods such as spray drying and melt granulation, dissolution-precipitated polyamide powder typically exhibits irregular, non-spherical shapes, a broad particle size distribution (PSD), particle agglomeration, and increased surface energy. These characteristics enhance particle-particle interactions during powder layer spreading in the PBF-LB process, leading to suboptimal properties of the obtained shaped bodies. Additionally, these powders can degrade more efficiently during the PBF-LB process, resulting in lower UV resistance in the shaped bodies.

The present invention addresses the above-mentioned challenges and thus provides a polyamide powder with improved flowability, increased UV resistance, and reduced degradation during PBF-LB processing. Further, the present invention provides an optimized dissolution-precipitation process to produce polyamide powder feedstocks with enhanced particle morphology and fewer agglomerates.

The above-mentioned technical problem is solved by the subject matter set out in the appended set of claims, in particular, by a polyamide powder comprising
a polyamide; and
0.5 to 10 wt% based on the polyamide, of an additive composition,
wherein the additive composition comprises silica, a metal oxide, a primary antioxidant, and a secondary antioxidant (being different from the primary antioxidant).

According to the present invention, the polyamide powder comprises a polyamide. The polyamide is preferably selected from polycaproamide (polyamide 6), polyundecamide (polyamide 11), polylauroamide (polyamide 12), polyhexamethylene adipamide (polyamide 66), polydecamethylene sebacamide (polyamide 1010), polydodecamethylene sebacamide (polyamide 1012), polydodecamethylene dodecamide (polyamide 1212), polyhexamethylene sebacamide (polyamide 610), polyhexamethylene dodecamide (polyamide 612), polydecamethylene adipamide (polyamide 106), polydodecamethylene adipamide (polyamide 126), polycaproam ide/polyhexamethylene adipamide copolymer (polyamide 6/66), polycaproamide/polylauramide copolymer (polyamide 6/12), and mixtures thereof. More preferably, in view of controlling spherical shape and thermal properties, the polyamide of the polyamide core is selected from polycaproamide (polyamide 6), polyundecamide (polyamide 11), polylauroamide (polyamide 12), polyhexamethylene adipamide (polyamide 66), polyhexamethylene sebacamide (polyamide 610), and mixtures thereof. In an even more preferred embodiment of the present invention, the polyamide is polylauroamide (polyamide 12). Polyamide 12 is particularly beneficial in view of controlling spherical shape and thermal properties.

In a preferred embodiment of the present invention, the polyamide has a number average molecular weight Mₙ in the range from 10.000 g mol⁻¹ to 50.000 g mol⁻¹, more preferably from 15.000 g mol⁻¹ to 40.000 g mol⁻¹, even more preferably from 17.500 g mol⁻¹ to 35.000 g mol⁻¹.

The number average molecular weight Mₙ is determined by Gel Permeation Chromatography (GPC) in line with the standard ISO 16014-4:2019 using the measurement conditions described below.

The polyamide was adjusted to 1 mg mL⁻¹ by adding 1,1,1,3,3,3-hexafluoro-2-propanol as an eluent with 0.05 mol sodium trifluoroacetate for stabilization, dissolved at 40°C, and then cooled to room temperature. Insoluble substances were filtered and removed by using a PTFE filter to obtain a measurement sample.
Instrument: Agilent 1200 HPLC system
Column: PSS PFG 5 µm
Column temperature: 40°C
Mobile phase: 1,1,1,3,3,3-hexafluoro-2-propanol (HFIP) with 0.05 mol sodium trifluoroacetate (0.3 mL min⁻¹)
Detectors: Agilent 120 UV and Agilent 1200 RI
Standard: poly(methyl methacrylate)
Injection amount: 20 mL
Analysis time: 1 s

The polyamide represents the main component of the polyamide powder according to the present invention, which means that the polyamide powder comprises polyamides in at least more than 70 wt%, preferably more than 75 wt%, more preferably more than 90 wt%, and even more preferably more than 95 wt%, based on the total weight of the polyamide powder.

According to the present invention, the polyamide powder further comprises 0.5 to 10 wt% based on the polyamide, of an additive composition, wherein the additive composition comprises silica, a metal oxide, a primary antioxidant, and a secondary antioxidant.

The silica of the additive composition comprised in the polyamide powder, according to the present invention, can serve as a flow-aid and filler to beneficially reduce the inter-particle friction in the polyamide powder and enhance the flowability of the polyamide when used in PBF-LB.

The silica is not particularly limited but is preferably selected from precipitated silica and fumed silica, more preferably fumed silica. In an even more preferred embodiment of the present invention, the fumed silica is hydrophobic fumed silica, which is modified with, for example, dimethyldichlorosilane (DDS), polydimethylsiloxane (PDMS), or hexamethyldisilazane (HMDS).

The aforementioned fumed silica, particularly the hydrophobic fumed silica, can reduce the interparticle friction in the polyamide powder and enhance flow characteristics when used in PBF-LB in a particularly beneficial manner.

Commercially available fumed silica that may be used in the context of the invention include AEROSIL^{®} R202, AEROSIL^{®} R972, AEROSIL^{®} R974, AEROSIL^{®} R976, AEROSIL^{®} R104, AEROSIL^{®} R106, AEROSIL^{®} R208, AEROSIL^{®} R805, AEROSIL^{®} R812, AEROSIL^{®} R816, AEROSIL^{®} R7200, AEROSIL^{®} R8200, AEROSIL^{®} R9200, and AEROSIL^{®} R711 (manufactured by Evonik); XYSIL^{®} R120H, XYSIL^{®} R120B, XYSIL^{®} R170H, and XYSIL^{®} R230 (manufactured by Henan Xunyu Chemical Co., Ltd.).

The metal oxide of the additive composition comprised in the polyamide powder, according to the present invention, can serve as a filler and modulate flowability. In addition, the metal oxide provides UV resistance to the polyamide powder.

The metal oxide is not particularly limited but is preferably selected from zinc oxide, titanium oxide, cerium oxide, and aluminum oxide, more preferably titanium oxide and zinc oxide. In an even more preferred embodiment of the present invention, the titanium oxide is surface-treated with inorganic (e.g., alumina, silica) or organic coatings, wherein the content of titanium oxide is equal to or more than 92 wt%.

The aforementioned metal oxides, particularly titanium oxide, prevent defects by improving the flowability of the polyamide powder when used in PBF-LB. In addition, titanium dioxide is particularly beneficial to provide UV resistance to the polyamide powder.

Commercially available metal oxides that may be used in the context of the present invention include TiONA^{®} 8300 and TiONA^{®} RCL-89 (manufactured by Tronox Ltd.); KRONOS^{®} 2222 and KRONOS^{®} 2500 (manufactured by Kronos Worldwide, Inc.).

The additive composition of the present invention comprises two different antioxidants that interrupt the degradation processes in different ways: a primary antioxidant and a secondary antioxidant.

The primary antioxidant of the additive composition comprised in the polyamide powder can react rapidly with free radicals and are, therefore, called "radical scavengers".

The primary antioxidant is not particularly limited but is preferably selected from sterically hindered phenols and sterically hindered amines, more preferably a sterically hindered phenol, for example, *N,N'*-(hexane-1,6-diyl)bis[3-(3,5-di-*tert*-butyl-4-hydroxyphenyl)propanamide], pentaerythritol tetrakis(3-(3,5-di-tert-butyl-4-hydroxyphenyl)propionate), and octadecyl-[3-(3,5-di-tert-butyl-4-hydroxyphenyl)propionate]. In an even more preferred embodiment of the present invention, the sterically hindered phenol is *N,N'*-(hexane-1,6-diyl)bis[3-(3,5-di-*tert-*butyl-4-hydroxyphenyl)propanamide].

The aforementioned sterically hindered phenols, particularly *N,N*'-(hexane-1,6-diyl)bis[3-(3,5-di-*tert*-butyl-4-hydroxyphenyl)propanamide], can reduce degradation of the polyamide in a particularly beneficial manner.

Commercially available primary antioxidants that may be used in the context of the present invention include Irganox^{®} 1098 (manufactured by BASF SE).

The secondary antioxidant of the additive composition comprised in the polyamide powder, according to the present invention, can react with hydroperoxides to form non-radical products. The secondary antioxidants have a synergistic effect in combination with the primary antioxidants defined above.

The secondary antioxidant is not particularly limited but is preferably selected from phosphites and thioesters, more preferably a phosphite, for example, tris(2,4-di-tert-butylphenyl)phosphite, tris(2,4-di-tert-butyl-6-methylphenyl)phosphite, bis(2,4-di-tert-butylphenyl)pentaerythritol diphosphate, bis(2,4-dicumylphenyl) pentaerythritol diphosphate, phenylphosphonite, triisooctyl phosphite, trisnonylphenyl phosphite, and inorganic hypophosphite salts. In an even more preferred embodiment of the present invention, the phosphite is tris(2,4-di-tert-butylphenyl)phosphite.

The aforementioned phosphites, particularly tris(2,4-di-tert-butylphenyl) phosphite, can protect both the polyamide and the primary antioxidant to prevent discoloration of the obtained shaped body and increase its long-term thermal stability in a particularly beneficial manner.

Commercially available secondary antioxidants that may be used in the context of the present invention include Irgafos^{®} 168 (manufactured by BASF SE); Doverphos 4, Doverphos 74, and Doverphos 480 (manufactured by Dover Chemical Corporation).

According to the present invention, the polyamide powder comprises 0.5 to 10 wt%, preferably 0.8 to 6 wt%, and more preferably 1 to 3 wt%, of the additive composition based on the polyamide to provide particularly beneficial flowability, UV resistance, and degradation resistance to the polyamide powder.

The polyamide powder, according to the present invention, may further comprise additives, such as flame retarding agent(s), impact modifier(s), co-crystallizer(s), plasticizer(s), dye(s), antistatic agent(s), waxe(s), anti-nucleating agent(s), and/or compatibilizer(s). The total amount of these additives ranges preferably from 0.01 wt% to 25 wt%, based on the weight of the additive composition.

The suitability of a polymer to be used in PBF-LB depends, first of all, on its thermal and physical properties. The melting temperature is important since it must allow the effective sintering of the resulting polyamide powder and a satisfactory strengthening of the obtained shaped body.

The polyamide powder, according to the present invention, preferably has a peak melting temperature Tₘ from about 160°C or more and 200°C or less, more preferably from 170°C or more and 190°C or less, and even more preferably 175°C or more and 180°C or less and has a crystallization temperature T_{c} from about 100°C or more and 170°C or less, more preferably from 130°C or more and 160°C or less, and even more preferably 145°C or more and 155°C or less. The melting temperature Tₘ and crystallization temperature T_{c} are determined by differential scanning calorimetry (DSC) in line with the standard ISO 11357-1:2023 using the measurement conditions described below.

The measurement atmosphere was nitrogen (50 mL min⁻¹), and the temperature was raised from 25°C to 200°C at 10°C min⁻¹. The amount of the sample was approximately 8 mg, and an aluminum sample pan was used. Indium was used for temperature calibration.

In PBF-LB, the flowability of the polyamide is important to prevent defects in the obtained shaped body that cause a decrease in mechanical properties and to improve the appearance of the obtained shaped body. The polyamide powder according to the present invention preferably has a melt flow index ranging from 10 g/10 min to 100 g/10 min, more preferably from 30 g/10 min to 60 g/10 min, even more preferably ranging from 38 g/10 min to 45 g/10 min, at a temperature of 235°C and under a load of 2.16 kg. The melt flow index is determined according to the standard ISO 1133:2011.

The polyamide powder, according to the present invention, preferably has a mean particle size of d₅₀ ranging from 30 µm to 93 µm, more preferably from 45 µm to 83 µm, and even more preferably from 55 µm to 73 µm. In a preferred embodiment, the polyamide powder has a mean particle size of d₁₀ ranging from 20 µm to 65 µm, more preferably from 35 µm to 60 µm, and even more preferably from 40 µm to 55 µm. In another preferred embodiment, the polyamide powder has a mean particle size of d₉₀ ranging from 60 µm to 130 µm, more preferably from 70 µm to 110 µm, and even more preferably from 80 µm to 96 µm.

The mean particle size d₅₀ is the mean size of particles (corresponding to the highest dimension of said particles) for which 50% by volume respectively of said particles have an equal or smaller size. By analogy, the mean particle size d₁₀ is the mean size of particles (corresponding to the highest dimension of said particles) for which 10% by volume respectively of said particles have an equal or smaller size, and the mean particle size d₉₀ is the mean size of particles (corresponding to the highest dimension of said particles) for which 90% by volume respectively of said particles have an equal or smaller size.

The particle size is determined by the dry laser granulometry technique (also known as laser diffraction) in line with the standard ISO 13320:2020. The Fraunhofer diffraction approach is used to calculate the particle size (volume-weighted, in µm) using a circle equivalent diameter to correspond to the diameter of the particle.

The polyamide powder, according to the present invention, preferably has a sphericity of 80 or more and 100 or less, more preferably 85 or more and 98 or less, and even more preferably 89 or more and 92 or less.

The sphericity of the polyamide powder is determined by dynamic light scattering by filling 3 mL volume of sample into the device's vibration feeder, dispersing it in the internal airflow, and taking the pictures during the measurement to be analyzed concerning and calculating sphericity particle shape by proportioning area equivalent diameter to equivalent perimeter diameter following ISO 13322-2:2021 - Dynamic image analysis methods.

A further aspect of the present invention concerns a method for producing a polyamide powder comprising:
dissolution of a polyamide resin in a solvent at a dissolution temperature of 130°C or more and 155°C or less;
precipitation of polyamide powder by a cooling rate from 0.05 to 2°C min⁻¹ from the dissolution temperature to room temperature; and
additivation of the polyamide powder with an additive composition,
wherein the additive composition comprises silica, a metal oxide, a primary antioxidant, and a secondary antioxidant.

All features described above relating to the polyamide powder according to the invention also apply to the method according to the invention for producing the polyamide powder.

In step (I) of the method according to the present invention, a polyamide is dissolved in a solvent at a dissolution temperature of 130°C or more and 155°C or less.

The dissolution temperature of step (I) is 130°C or more and 155°C or less, preferably 135°C or more and 147°C or less, and even more preferred 143°C or more and 146°C or less.

In a preferred embodiment of the present invention, the dissolution of the polyamide in the solvent is supported by stirring the mixture, wherein the mixture is stirred at a stirring speed of 300 rpm or more and 700 rpm or less, more preferably at 400 rpm or more and 600 rpm or less, and even more preferably at a stirring speed of 450 rpm or more and 550 rpm or less.

In another preferred embodiment of the present invention, the mixture is stirred for 1 min or longer and 5 hours or shorter, more preferably at 15 min or longer and 2 hours or less, and even more preferably at a stirring speed of 55 min or longer and 65 min or shorter.

The solvent used to dissolve the polyamide is not particularly limited but is preferably selected from n-heptane, hexafluoroisopropanol, dimethylformamide, xylene, m-cresol, toluene, hexane, ethanol, chloroform, and a mixture thereof, more preferably ethanol.

When step (I) satisfies one or more of the aforementioned parameters, a saturated polyamide solution is beneficially formed.

In step (II) of the method according to the present invention, a polyamide powder is precipitated by a cooling rate from 0.05 to 2°C min⁻¹ from the dissolution temperature to room temperature. According to the present invention, room temperature corresponds to 25°C.

The cooling rate from the dissolution temperature to room temperature is from 0.05 to 2°C min⁻¹, preferably from 0.1 to 1°C min⁻¹, and more preferably from 0.2 to 0.8°C min-1

In a preferred embodiment of the present invention, the cooling is carried out in a first step at a cooling rate from 0.05 to less than 0.5°C min⁻¹, and a second step at a cooling rate from 0.5 to 2°C min⁻¹. In another preferred embodiment, the first cooling step is carried out to an intermediate temperature, wherein the intermediate temperature is 95°C or more and 125°C or less, preferably 100°C or more and 120°C or less, more preferred 105°C or more and 115°C or less, and particularly preferable the intermediate temperature is 109°C.

The first and second cooling steps can be carried out directly one after the other, or the intermediate temperature can be maintained for a certain period. The period is not limited but can, for example, be 1 min or longer and 30 min or shorter.

When step (II) satisfies one or more of the aforementioned parameters, a polyamide powder having a narrow PSD and a spherical or near-spherical particle morphology can be obtained.

In step (III), the polyamide powder obtained in step (II) is additivated with an additive composition, wherein the additive composition comprises silica, a metal oxide, a primary antioxidant, and a secondary antioxidant.

The additivation is not particularly limited but is preferably carried out in a grinder, for example, using a double blade grinder with a rotation speed of 28000 rpm for 40 s followed by mixing in a 3D shaker mixer at 20 rpm for 60 min. Thereby, the additive composition is evenly distributed on the polyamide powder.

In an optional step (IV) of the method, the polyamide powder obtained in step (II) is separated from the solvent by centrifugation before the additivation of the polyamide powder. The centrifugation is not particularly limited and is, for example, carried out at 600 rpm for 12 min with a Vibromak VKYA50.

In an optional step (V), which is carried out after step (IV), the polyamide powder is dried at a temperature of 50 to 100°C, and more preferably at a temperature of 80 to 90°C with rotary evaporator under vacuum for at least 30 min, preferably between 1 hour and 5 hours, or in a furnace under vacuum at temperature between 80 to 90°C, more preferably 83 to 87°C for at least 30 min, preferably between 1 hour and 5 hours.

In an optional step (VI), which is preferably carried out as the last of the above steps, the polyamide powder is sieved to obtain a polyamide powder having a particle diameter of 25 µm or more and 150 µm or less, more preferably 32 µm or more and 100 µm or less. When the polyamide powder is sieved, a narrower PSD can be obtained.

Another aspect of the present application concerns a use of the polyamide powder according to the present invention in a laser powder bed fusion process. By using the polyamide powder according to the present invention in a laser powder bed fusion process, its enhanced flowability facilitates better layer spreading, reduced clogging in the powder feed systems, and improved packing density.

Another aspect of the present invention concerns a shaped body obtained from a laser powder bed fusion process using the polyamide powder according to the present invention. The obtained shaped body demonstrates superior mechanical properties, uniformity, and durability due to the optimized flow behavior and reduced degradation during processing.

### Examples

The following examples further illustrate the present invention without limiting the present invention thereon.

### [Example 1]

2160 g of polylauroamide ("polyamide 12", manufactured by EMS-CHEMIE AG) is dissolved in 13680 mL ethanol (manufactured by Tekkim) by stirring at 500 rpm at 145°C (heating rate was 3°C min⁻¹ from room temperature to 145°C) for 60 min to obtain a saturated polyamide solution. The saturated polyamide solution is cooled down at a cooling rate of 0.4°C min⁻¹ to an intermediate temperature of 109°C and held at 109°C for 5 min. Subsequently, the solution is cooled to room temperature with a cooling rate of 0.6 °C min⁻¹ for precipitating the polyamide powder, which is separated by centrifugation at 600 rpm for 12 min and dried in a furnace at 86°C for 180 min under vacuum to obtain 2100 g of polyamide 12 powder.

The obtained polyamide powder is mixed in a double blade mill grinder at 28000 rpm for 40 s followed by mixing in a 3D shaker mixer at 20 rpm for 60 min with 21 g of hydrophobic fumed silica (AEROSIL^{®} R972, manufactured by BASF SE), 21 g of titanium dioxide (TiONA^{®}, manufactured by Tronox Ltd.), 5.25 g of *N,N*'-(hexane-1,6-diyl)bis[3-(3,5-di-tert-butyl-4-hydroxyphenyl)propanamide] (Irganox^{®} 1098, manufactured by BASF SE), and 5.25 g tris(2,4-di-tert-butylphenyl) phosphite (Irgafos^{®} 168, manufactured by BASF SE) to modify the polyamide powder. The modified polyamide powder is sieved to obtain a powder diameter of 32 µm to 100 µm.

### [Example 2]

The polyamide 12 powder was produced as described in Example 1. 2100 g of the polyamide powder is mixed in a grinder at 28000 rpm for 40 s followed by mixing in a 3D shaker mixer (i.e., Turbula) at 20 rpm for 60 min with 21 g of hydrophobic fumed silica (AEROSIL^{®} R972, manufactured by BASF SE), 10.5 g of titanium dioxide (TiONA^{®}, manufactured by Tronox Ltd.), 5.25 g of *N,N'*-(hexane-1,6-diyl)bis[3-(3,5-di-tert-butyl-4-hydroxyphenyl)propanamide] (Irganox^{®} 1098, manufactured by BASF SE), and 5.25 g tris(2,4-di-tert-butylphenyl) phosphite (Irgafos^{®} 168, manufactured by BASF SE) to modify the polyamide powder. The modified polyamide powder is sieved to obtain a powder diameter of 32 µm to 100 µm.

### [Example 3]

The polyamide 12 powder was produced as described in Example 1. 2100 g of the polyamide powder is mixed in a grinder at 28000 rpm for 40 s followed by mixing in a 3D shaker mixer (i.e., Turbula) at 20 rpm for 60 min with 2.1 g of hydrophobic fumed silica (AEROSIL^{®} R972, manufactured by BASF SE), 10.5 g of titanium dioxide (TiONA^{®} manufactured by Tronox Ltd.), 5.25 g of *N,N*'-(hexane-1,6-diyl)bis[3-(3,5-di-tert-butyl-4-hydroxyphenyl)propanamide] (Irganox^{®} 1098, manufactured by BASF SE), and 5.25 g tris(2,4-di-tert-butylphenyl) phosphite (Irgafos^{®} 168, manufactured by BASF SE) to modify the polyamide powder. The modified polyamide powder is sieved to obtain a powder diameter of 32 µm to 100 µm.

The polyamide powders of Example 1, Example 2, and Example 3 were characterized for their particle size distribution, their morphology, melt viscosity and their flowability.

### [Analysis of particle size distribution]

The particle size distribution of the polyamide powder d₁₀, d₅₀, and d₉₀, as well as the span ((d₉₀-d₁₀)/d₅₀) value was determined in line with the standard ISO 13320:2020 as described above.

### [Morphology assessment]

The morphology of the polyamide powder was assessed by sphericity measured by dynamic light scattering by filling 3 mL volume of sample into the device's vibration feeder, dispersing in the internal airflow, and taking the pictures during the measurement to be analyzed concerning and calculate sphericity particle shape by proportioning area equivalent diameter to equivalent perimeter diameter ISO 13322-2:2021 - Dynamic image analysis methods to determine sphericity value.

### [Analysis of flowability]

The flowability of the polyamide powder was analyzed by the Hausner Ratio, the Avalanche Angle, and the Melt Flow index.

The Hausner Ratio was determined by using a granular material density analyzer (GranuPack^{™}, manufactured by GranuTools^{™}) and tapping the powder with 3 mm free fall taps during the test. After each tap, the height of the sample volume was automatically measured with an inductive sensor. The Hausner Ratio, which is the ratio between the freely settled bulk density and the tapped bulk density, was calculated based on the measured heights of the sample following the standard ASTM D 7481:2018.

The Avalanche Angle is determined by using a rotating drum device with the following test procedure. The rotating drum was filled with 50 mL of polyamide powder. The drum was operated at room temperature. The measurements were performed with increasing rotational speed (1, 2, 4, 6, 8, 10, 20, 40, and 60 rpm). The dynamic angle of repose (dAoR) was recorded by taking 50 images every second via a CCD camera at each rotational speed. The software detects the powder surface using an edge detection algorithm and determines the angle relative to the horizontal line.

The melt flow index provides easy access to basic rheological data, which is widely used in plastics processing. The polymer melt is pressed through a nozzle with a defined diameter at a predetermined temperature and an exact load (see, for example, DIN EN ISO 1133). The polymer volume that emerges from the nozzle in a time window of 10 minutes is the result (MVR value in cm³/10 min). Similarly, the result can also be expressed in g/10 min as MFI. Both statements should be considered equivalent. The measuring conditions were a temperature of 235°C and a load weight of 2.16 kg according to the standard ISO 1133:2011 (see also Manfred Schmid, Laser sintering with plastics, Technology, Processes, and Materials, Hanser Publishers, Munich, ISBN: 978-1-56990-683-5).

The powder properties of Example 1 to 3 are given in Table 1.

**Table 1. Powder properties of given Examples**

| **PA12 powder sample** | **d₁₀ (µm)** | **d₅₀ (µm)** | **d₉₀ (µm)** | **Span (-)** | **Sphericity** | **Hausner Ratio (-)** | **Avalanche Angle (°)** | **MFI (g/10 min)** |
|---|---|---|---|---|---|---|---|---|
| **Example 1** | 50 | 72 | 95 | 0.62 | 0.90 | 1.08 | 28. 07 | 40 |
| **Example 2** | 44 | 66 | 88 | 0.67 | 0.91 | 1.05 | 25.73 | 44 |
| **Example 3** | 43 | 60 | 80 | 0.62 | 0.90 | 1.06 | 31.73 | 39 |

## Claims

1. Polyamide powder comprising
a polyamide; and
0.5 to 10 wt% based on the polyamide, of an additive composition,
wherein the additive composition comprises silica, a metal oxide, a primary antioxidant, and a secondary antioxidant.

2. The polyamide powder according to claim 1, wherein
the polyamide is polyamide 12.

3. The polyamide powder according to claim 1 or 2, wherein
the silica is hydrophobic fumed silica.

4. The polyamide powder according to any one of claims 1 to 3, wherein
the metal oxide is selected from the group consisting of zirconium oxide, tantalum oxide, titanium oxide, tungsten oxide, boron oxide, aluminum oxide, and beryllium oxide.

5. The polyamide powder according to any one of claims 1 to 4, wherein
wherein the primary antioxidant is a sterically hindered phenol or a sterically hindered amine.

6. The polyamide powder according to claim 5, wherein
wherein the sterically hindered phenol is N,N'-(hexane-1,6-diyl)bis[3-(3,5-di-tert-butyl-4-hydroxyphenyl)propanamide].

7. The polyamide powder according to any one of claims 1 to 6, wherein
the secondary antioxidant is a phosphite or a thioester.

8. The polyamide powder according to claim 7, wherein
the secondary antioxidant is tris(2,4-di-tert-butylphenyl) phosphite.

9. The polyamide powder according to any one of claims 1 to 8, wherein
a melt flow index ranges from 1 g/10 min to 50 g/10 min.

10. The polyamide powder according to any one of claims 1 to 9, wherein
the mean particle size d50 ranges from 30 µm to 90 µm.

11. The polyamide powder according to any one of claims 1 to 10, wherein
the sphericity is 80 or more and 100 or less.

12. A method for producing a polyamide powder comprising
dissolution of a polyamide resin in a solvent at a dissolution temperature of 130°C or more and 155°C or less;
precipitation of polyamide powder by a cooling rate from 0.05 to 2°C min⁻¹ from the dissolution temperature to room temperature; and
additivation of the polyamide powder with an additive composition,
wherein the additive composition comprises silica, a metal oxide, a primary antioxidant, and a secondary antioxidant.

13. The method according to claim 12, wherein
the cooling is carried out in a first step at a cooling rate from 0.05 to less than 0.5°C min⁻¹, and
a second step at a cooling rate from 0.5 to 2°C min⁻¹.

14. The method according to claim 12 or 13, wherein
the solvent is selected from n-heptane, xylene, m-cresol, toluene, hexane, ethanol, chloroform, and a mixture thereof.

15. Use of the polyamide powder according to any one of claims 1 to 9 in laser powder bed fusion.
